# EUROPEAN PATENT SPECIFICATION

(11) **EP 4 339 810 B1**
(45) Date of publication and mention of the grant of the patent: **28.10.2026**
(21) Application number: 23208981.3
(22) Date of filing: 10.02.2015
(51) Int. Cl.: G06F 3/01, G06F 16/28, G06F 18/2415, G06V 10/94, G06V 40/20, G06F 16/2458

(54) **USER BEHAVIOR RECOGNITION METHOD, USER EQUIPMENT, AND BEHAVIOR RECOGNITION SERVER**
VERFAHREN ZUR ERKENNUNG VON BENUTZERVERHALTEN, BENUTZERGERÄT UND SERVER ZUR ERKENNUNG VON VERHALTEN
PROCÉDÉ DE RECONNAISSANCE DE COMPORTEMENT D'UTILISATEUR, ÉQUIPEMENT D'UTILISATEUR ET SERVEUR DE RECONNAISSANCE DE COMPORTEMENT

(30) Priority: 22.05.2014 CN 201410217036
(43) Date of publication of application: 20.03.2024
(62) Document number(s) of the earlier application(s) in accordance with Art. 76 EPC: 20183922.2 / 3 796 134; 15796385.1 / 3 139 287
(73) Proprietor: Huawei Technologies Co., Ltd., Shenzhen, Guangdong 518129 (CN)
(72) Inventor: YANG, Qiang, Shenzhen 518129 (CN); DENG, Ke, Shenzhen 518129 (CN); LEUNG, Wing Ki, Shenzhen 518129 (CN)
(74) Representative: Epping - Hermann - Fischer

(56) References cited:
- EP-A1- 3 001 332
- US-A1- 2007 239 637
- US-A1- 2011 319 094
- US-A1- 2012 136 890
- BG19BOT ET AL: "Recommender system", WIKIPEDIA, THE FREE ENCYCLOPEDIA, 29 July 2014 (2014-07-29), pages 1 - 9, XP055282430, Retrieved from the Internet <URL:https://en.wikipedia.org/w/index.php?title=Recommender_system&oldid=618921071> [retrieved on 20160621]

## Description

### TECHNICAL FIELD

Embodiments of the present invention relate to the field of data mining, and more specifically, to user behavior recognition methods, a user equipment, a behavior recognition server, a behavior recognition system, and a computer-readable storage medium.

### BACKGROUND

As an individualized demand of a user for a smartphone increases, a user behavior recognition function has become a basic configuration of the smartphone. The user behavior recognition function means that a behavior of a user can be determined at a specific time, at a specific place, or on a specific occasion, to enable the smartphone to predict a requirement of the user based on the determined behavior of the user, automatically adjust various settings, and provide a related service for the user. A user behavior may refer to an activity status of the user, such as, walking, running, staying still, climbing stairs, walking down stairs, or sleeping, or refer to a scenario that the user is in, such as, in an office, in a car, on a train, outdoors, indoors, in a conference, or in a theater, or a combination of an activity status of the user and a scenario that the user is in, that is, staying still in a car, staying still in a conference, or the like.

User behavior recognition is based on a behavior recognition model. A smartphone may create one behavior recognition model for each user behavior. When collecting a group of sensing data, the smartphone may input the sensing data to the foregoing created behavior recognition model, and determine, according to an output result of the behavior recognition model, a behavior corresponding to the sensing data. A common method for creating a behavior recognition model is a machine learning method. In this method, generally, a large amount of training data is required to create an accurate behavior recognition model. However, in reality, there is usually little available training data, and accuracy of behavior recognition performed by a behavior recognition model created in this case is relatively poor. After obtaining an initial behavior recognition model, each user needs to accumulate training data of the user, and update a behavior recognition model of the user according to the accumulated training data, to improve accuracy of behavior recognition performed by the behavior recognition model.

Therefore, in the prior art, different users are separated from each other, and each user needs to independently create a new behavior recognition model, independently accumulate training data, and update the new behavior recognition model according to the accumulated training data. This process is usually time-consuming and strenuous. Therefore, scalability of the prior art for a new user behavior is relatively poor, accuracy of a new behavior recognition model created by a user is relatively low, relatively long time of learning is required to meet an accuracy requirement of the user for behavior recognition, and user experience is relatively poor.

Document US 2007/0239637 A1 provides a system and a method for prediction of a user goal for command/control of a personal device (e.g., mobile phone). The system employs statistical model(s) that can predict a command based, at least in part, on past user behavior (e.g., probability distribution over a set of predicates, and optionally arguments).

Further, the system can be employed with a speech recognition component to facilitate language modeling for predicting the user goal. The system can include predictive user models (e.g., predicate model and argument model) that receive a user input (e.g., utterance) and employ statistical modeling to determine the likely command without regard to the actual content of the input (e.g., utterance). The system employs features for predicting the next user goal which can be stored in a user data store. Features can capture personal idiosyncrasies or systematic patterns of usage (e.g., device-related, time-related, predicate-related, contact-specific and/or periodic features).

Document US 2011/0319094 A1 provides an information processing apparatus including: a positioning unit acquiring positioning information on a latitude and longitude showing a position of the positioning unit; a transmission unit transmitting a time-series log, which includes the positioning information acquired by the positioning unit, to a server; a reception unit receiving an activity model showing an activity state of a user, the activity model being obtained by a learning process carried out by the server based on the time-series log; a recognition unit recognizing a present activity state of the user using the positioning information acquired by the positioning unit and the activity model received by the reception unit; and a prediction unit predicting behavior of the user from the present activity state of the user recognized by the recognition unit.

Document US 2012/0136890 A1 presents a behavior pattern recognition method, a system and a computer application program thereof. The method is applicable to an electronic device which has a storage unit for storing multiple sets of behavior record information, and the method includes the following step. Firstly, a first detecting unit acquires first behavior feature information, a collaboration network module acquires at least one second detecting unit having coherence with the first detecting unit. Then, the at least one second detecting unit acquires at least one second behavior feature information, and a processing unit compares the at least one second behavior feature information and the behavior record information to generate at least one comparison result. Finally, a behavior definition represented by the first behavior feature information is determined according to the comparison result.

Document "Recommender system", Wikipedia, the free encyclopedia, version of July 29, 2014, pages 1-9, https://en.Wikipedia.org/w/index.php?title=Recommender_system&oldid=618921071, states that a recommender system, or a recommendation system (sometimes replacing system with terms such as platform, engine, or algorithm), is a subclass of information filtering system that provides suggestions for items that are most pertinent to a particular user. Recommender systems are particularly useful when an individual needs to choose an item from a potentially overwhelming number of items that a service may offer.

Document EP 3 001 332 A1 refers to a method for determining a target user that includes: for any target service, acquiring historical data of multiple behavior objects that belong to a same service type as the target service; establishing a correspondence between user identifiers of different users and behavior object identifiers of different behavior objects of the same type; based on multiple established correspondences, constructing a data model that includes a user identifier and a behavior object identifier; using a value update rule to obtain, by means of calculation, a value of a probability that a user corresponding to each user identifier becomes a target user of the target service; and further using the value of the probability to select a target user of the target service, which can not only determine a target user group in a relatively open manner, but also effectively improve accuracy of and efficiency in determining a target user.

### SUMMARY

The present invention provides user behavior recognition methods, a user equipment, a behavior recognition server, a behavior recognition system, and a computer-readable storage medium, which can improve efficiency and accuracy of creating a behavior recognition model. The present invention is defined by the attached set of claims. Embodiments and aspects which are not covered by the invention should be considered as examples useful for understanding the invention.

According to a first aspect, a user behavior recognition method is provided, including: receiving, by a first user equipment of a first user, from a behavior recognition server a statistical distribution information of a target parameter that is determined by the behavior recognition server, the statistical distribution information of the target parameter is determined according to values of the target parameter corresponding to multiple behavior recognition models of the target user behavior, the multiple behavior recognition models are sent by multiple other user equipments of other users to the behavior recognition server, and obtaining, by the first user equipment according to the statistical distribution information of the target parameter received from the behavior recognition server, a behavior recognition model of the target user behavior corresponding to the first user equipment, wherein the first user equipment and the multiple other user equipments are each configured to communicate with one or more core networks by using a radio access network and are each selected from the following group: a mobile phone, a computer with a mobile terminal, a in-vehicle mobile apparatus which exchanges voice and/or data with the radio access network.

With reference to the first aspect, in a possible implementation manner, the statistical distribution information of the target parameter includes at least one piece of the following information: a probability distribution curve of the target parameter, an expected value of the target parameter, and a value of the target parameter that has a largest occurrence probability.

With reference to the foregoing possible implementation manners, in a possible implementation manner, the receiving, by a first user equipment, statistical distribution information of a target parameter corresponding to a target user behavior includes: sending, by the first user equipment, a data download request to the behavior recognition server, where the data download request includes an identifier of the target user behavior; and receiving, by the first user equipment, the statistical distribution information of the target parameter that is determined by the behavior recognition server according to the identifier of the target user behavior, where the statistical distribution information of the target parameter is determined by the behavior recognition server according to the values of the target parameter in the multiple behavior recognition models of the target user behavior that are sent by the multiple user equipments to the behavior recognition server.

With reference to the foregoing possible implementation manners, in a possible implementation manner, the method further includes: sending, by the first user equipment, the behavior recognition model of the target user behavior that is created by the first user equipment to the behavior recognition server, so that the behavior recognition server updates the statistical distribution information of the target parameter according to a value of the target parameter in the behavior recognition model.

According to a second aspect, a user equipment is provided, including: an acquiring module, configured to receive statistical distribution information of a target parameter corresponding to a target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and a model creating module, configured to create and save, according to the statistical distribution information of the target parameter that is acquired by the acquiring module, a behavior recognition model of the target user behavior that is corresponding to the user equipment, to recognize the target user behavior. The uses equipment is configured to carry out the method according to the first aspect.

With reference to the second aspect, in a first possible implementation manner, the statistical distribution information of the target parameter includes at least one piece of the following information: a probability distribution curve of the target parameter, an expected value of the target parameter, and a value of the target parameter that has a largest occurrence probability.

With reference to the foregoing possible implementation manners, in a possible implementation manner, the acquiring module includes: a first sending unit, configured to send a data download request to a behavior recognition server, where the data download request includes an identifier of the target user behavior; and a first receiving unit, configured to receive the statistical distribution information of the target parameter that is determined by the behavior recognition server according to the identifier of the target user behavior that is sent by the sending unit, where the statistical distribution information of the target parameter is determined by the behavior recognition server according to the values of the target parameter in multiple behavior recognition models of the target user behavior that are sent by the multiple other user equipments to the behavior recognition server.

With reference to the foregoing possible implementation manners, in a possible implementation manner, the acquiring module includes: a second receiving unit, configured to receive the multiple behavior recognition models of the target user behavior that are respectively sent by the multiple other user equipments; and a determining unit, configured to determine the statistical distribution information of the target parameter according to the values of the target parameter in the multiple behavior recognition models of the target user behavior that are received by the second receiving unit. With reference to the foregoing possible implementation manners, in a possible implementation manner, the user equipment further includes a sending module, configured to send the behavior recognition model of the target user behavior that is created by the model creating module to the behavior recognition server, so that the behavior recognition server updates the statistical distribution information of the target parameter according to a value of the target parameter in the behavior recognition model.

According to a third aspect, a behavior recognition server is provided, including: a receiving module, configured to receive a data download request sent by a first user equipment, where the data download request includes an identifier of a target user behavior; a determining module, configured to determine, according to the identifier of the target user behavior that is received by the receiving module, statistical distribution information of a target parameter corresponding to the target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and a sending module, configured to send, to the first user equipment, the statistical distribution information of the target parameter that is determined by the determining module, so that the first user equipment creates the behavior recognition model of the target user behavior according to the statistical distribution information of the target parameter. The behavior recognition server is configured to carry out the method according to the first aspect.

With reference to the third aspect, in a possible implementation manner, the statistical distribution information of the target parameter includes at least one piece of the following information: a probability distribution curve of the target parameter, an expected value of the target parameter, and a value of the target parameter that has a largest occurrence probability.

With reference to the foregoing possible implementation manners, in a second possible implementation manner, the behavior recognition server has a basic knowledge base and multiple coordinated knowledge bases, where the basic knowledge base is used to store statistical distribution information of a target parameter corresponding to at least one user behavior, where the statistical distribution information is commonly used by multiple user groups, and each coordinated knowledge base in the multiple coordinated knowledge bases is used to store statistical distribution information of a target parameter corresponding to at least one user behavior, where the statistical distribution information is exclusively used by one user group in the multiple user groups, and the at least one user behavior includes the target user behavior; and the determining module includes: a first determining unit, configured to determine a user group of the first user equipment; and a second determining unit, configured to: if the first determining unit determines that the first user equipment does not belong to any user group in the multiple user groups, determine, by the behavior recognition server from the basic knowledge base, the statistical distribution information of the target parameter corresponding to the target user behavior; or a third determining unit, configured to: if the first determining unit determines that the first user equipment belongs to a first user group in the multiple user groups, determine, by the behavior recognition server from a coordinated knowledge base corresponding to the first user group, the statistical distribution information of the target parameter corresponding to the target user behavior.

With reference to the foregoing possible implementation manners, in a possible implementation manner, the receiving module is further configured to receive the behavior recognition model of the target user behavior that is created by the first user equipment according to the statistical distribution information of the target parameter and sent by the first user equipment; and the behavior recognition server further includes an updating module, configured to update the statistical distribution information of the target parameter according to the behavior recognition model that is sent by the first user equipment and received by the receiving module.

With reference to the foregoing possible implementation manners, in a possible implementation manner, the updating module includes: a fourth determining unit, configured to determine, according to the behavior recognition model sent by the first user equipment, a value of the target parameter that is corresponding to the first user equipment; and a statistics collecting unit, configured to: collect mathematical statistics on a value of the target parameter according to the values of the target parameter that are respectively corresponding to the multiple other user equipments, and the value of the target parameter that is corresponding to the first user equipment and determined by the fourth determining unit, and determine that a statistical result is updated statistical distribution information of the target parameter.

With reference to the foregoing possible implementation manners, in a possible implementation manner, the receiving module is further configured to receive, before receiving the data download request sent by the first user equipment, the multiple behavior recognition models of the target user behavior that are respectively sent by the multiple other user equipments; and the determining module is further configured to: determine, according to the multiple behavior recognition models of the target user behavior that are respectively sent by the multiple other user equipments and received by the receiving module, the values of the target parameter that are respectively corresponding to the multiple other user equipments, and determine the statistical distribution information of the target parameter according to the values of the target parameter that are respectively corresponding to the multiple other user equipments.

According to a fourth aspect, a behavior recognition system is provided, including a behavior recognition server and multiple user equipments, where a first user equipment in the multiple user equipments is configured to send a data download request to the behavior recognition server, and the data download request includes an identifier of a target user behavior; the behavior recognition server is configured to: determine, according to the identifier of the target user behavior, statistical distribution information of a target parameter corresponding to the target user behavior, and send the statistical distribution information of the target parameter to the first user equipment, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and the first user equipment is further configured to: receive the statistical distribution information of the target parameter that is sent by the behavior recognition server, and create and save, according to the statistical distribution information of the target parameter, a behavior recognition model of the target user behavior that is corresponding to the first user equipment, to recognize the target user behavior. The behavior recognition system is configured to carry out the method according to the first aspect.

In a possible implementation manner, the statistical distribution information of the target parameter includes at least one piece of the following information: a probability distribution curve of the target parameter, an expected value of the target parameter, and a value of the target parameter that has a largest occurrence probability.

Based on the foregoing technical solution, according to the user behavior recognition method, the user equipment, the behavior recognition server, and the behavior recognition system in embodiments of the present invention, the user equipment creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user behavior recognition method in the embodiments of the present invention can improve efficiency and accuracy of creating a behavior recognition model, thereby enhancing user experience.

### BRIEF DESCRIPTION OF DRAWINGS

To describe the technical solutions in the embodiments of the present invention more clearly, the following briefly introduces the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a user behavior recognition method according to an embodiment of the present invention;
FIG. 2 is a schematic flowchart of a user behavior recognition method according to another embodiment of the present invention;
FIG. 3 is a schematic flowchart of a user behavior recognition method according to still another embodiment of the present invention;
FIG. 4 is a schematic block diagram of a user equipment according to an embodiment of the present invention;
FIG. 5 is a schematic block diagram of a behavior recognition server according to an embodiment of the present invention;
FIG. 6 is a schematic diagram of a network architecture of a behavior recognition system according to an embodiment of the present invention;
FIG. 7 is a schematic block diagram of a user equipment according to another embodiment of the present invention; and
FIG. 8 is a schematic block diagram of a behavior recognition server according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that in the embodiments of the present invention, a user equipment (User Equipment, UE) is referred to as a mobile terminal. The user equipment communicates with one or more core networks by using a radio access network (Radio Access Network, RAN). The user equipment is a mobile phone (or referred to as a cellular phone), or a computer with a mobile terminal, or in-vehicle mobile apparatus, which exchanges voice and/or data with the radio access network.

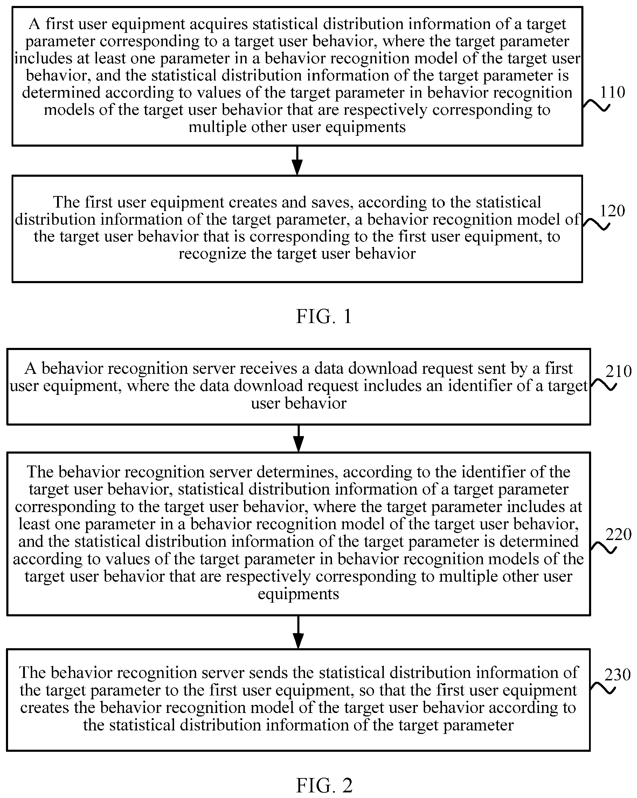

FIG. 1 is a schematic flowchart of a user behavior recognition method 100 according to an embodiment of the present invention. The method may be executed by an independent apparatus such as a UE, or may be executed by an integrated module in an apparatus. For ease of description, in the following, an example in which a UE executes the method is used for description. However, this embodiment of the present invention is not limited thereto. As shown in FIG. 1, the method 100 includes:
S110: A first user equipment receives statistical distribution information of a target parameter corresponding to a target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments.

The first user equipment may acquire empirical knowledge of the target user behavior, and create and save the behavior recognition model of the target user behavior according to the empirical knowledge of the target user behavior. The empirical knowledge may include the statistical distribution information of the target parameter, and may further include another parameter that can reflect a behavior characteristic of the target user behavior, or include another parameter that can reflect a common characteristic of the behavior recognition models of the target user behavior that are created by the multiple other users. This embodiment of the present invention is not limited thereto.

The statistical distribution information of the target parameter may be obtained by collecting mathematical statistics on the values of the target parameter that are respectively corresponding to the multiple other user equipments, where the target parameter may include the at least one parameter in the behavior recognition model of the target user behavior, that is, the target parameter may include some or all parameters in the behavior recognition model of the target user behavior. Optionally, the target parameter may further include a parameter that is related to a parameter in the behavior recognition model of the target user behavior. However, this embodiment of the present invention is not limited thereto.

For example, it is assumed that in the behavior recognition model of the target user behavior, distribution of a feature for each category meets a Gaussian distribution function, the target parameter may include an expected value of standard deviations of the Gaussian distribution function of this feature for multiple users, where the standard deviation can reflect importance of a feature of the target user behavior for recognizing the target user behavior. That is, if a feature is an important feature for recognizing the target user behavior, a Gaussian distribution function of this feature has a relatively small standard deviation. However, if a feature is an unimportant feature for recognizing the target user behavior, a Gaussian distribution function of this feature has a relatively large standard deviation. Therefore, when creating the behavior recognition model of the target user behavior, the first UE may use an expected value of standard deviations corresponding to the feature of the target user behavior for the multiple users as a standard deviation that the feature has in the behavior recognition model. However, this embodiment of the present invention is not limited thereto.

S120: The first user equipment creates and saves, according to the statistical distribution information of the target parameter, a behavior recognition model of the target user behavior that is corresponding to the first user equipment, to recognize the target user behavior.

The first user equipment may determine, according to the statistical distribution information of the target parameter, a value of the target parameter that is used when the behavior recognition model of the target user behavior is created, and create the behavior recognition model of the target user behavior by using the determined value of the target parameter. In this embodiment of the present invention, how the first user equipment uses the determined statistical distribution information of the target parameter to create the behavior recognition model of the target user behavior is not limited. A process of creating the behavior recognition model varies with the behavior recognition model. After determining the statistical distribution information of the target parameter according to the method disclosed in this embodiment of the present invention, a person skilled in the art may create a corresponding behavior recognition model according to a method in the prior art and a category of the behavior recognition model. Details are not described herein in this embodiment of the present invention.

After creating the behavior recognition model of the target user behavior, the first user equipment may save the behavior recognition model of the target user behavior and recognize a user behavior by using the behavior recognition model of the target user behavior.

Therefore, according to the user behavior recognition method in this embodiment of the present invention, a user equipment creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user behavior recognition method in this embodiment of the present invention can improve efficiency and accuracy of creating a behavior recognition model, thereby enhancing user experience.

In this embodiment of the present invention, the empirical knowledge of the target user behavior reflects a common characteristic of the behavior recognition models of the target user behavior that are corresponding to the multiple other user equipments, where a behavior recognition model of the target user behavior that is corresponding to one other user equipment may be a behavior recognition model created by the one other user equipment according to a large amount of training data of the target user behavior, or may be a behavior recognition model updated according to sensing data that is collected in actual application by the one other user equipment and related to the target user behavior. This embodiment of the present invention is not limited thereto.

Optionally, the statistical distribution information of the target parameter includes at least one piece of the following information: a probability distribution curve of the target parameter, an expected value of the target parameter, and a value of the target parameter that has a largest occurrence probability.

The statistical distribution information of the target parameter may also include other information, for example, an expected value of all values whose occurrence probabilities in the probability distribution curve of the target parameter exceed a threshold, or an expected value of other values in the probability distribution curve of the target parameter except a value whose occurrence probability is lower than a threshold, or the like. This embodiment of the present invention is not limited thereto.

In this embodiment of the present invention, the behavior recognition model may be any binary classifier in machine learning, such as, a naive Bayes classifier (Naive Bayes Classifier), an artificial neural network classifier (Artificial Neural Netowrk Classifier), a support vector machine classifier (Support Vector Machine Classifier), or a logistic (Logistic) regression model. The binary classifier may be updated in batch, or may be updated in an incremental manner, that is, a classifier may process only new data during an updating process. In consideration of limitations of a UE (such as a smartphone) on a calculating capability, a storage capacity, and a battery capacity, preferably, a classifier, such as a naive Bayes classifier, that is updated in an incremental manner may be used in this embodiment of the present invention.

Optionally, if the behavior recognition model is a naive Bayes classifier, a first feature with continuous feature values in the naive Bayes classifier is a first target parameter, a second feature with discrete feature values in the naive Bayes classifier is a second target parameter, and the statistical distribution information of the target parameter includes at least one piece of the following information:
an expected value of a normal distribution parameter that the first feature has in each category of the target user behavior, and a statistical distribution curve of the second feature for each category of the target user behavior. The first user equipment may determine, according to the statistical distribution curve of the second feature for each category of the target user behavior, a distribution curve shape that the second feature presents in each category of the target user behavior, and determine, according to data of the first user equipment and the distribution curve shape, the statistical distribution curve that the second feature corresponding to the first user equipment has in each category of the target user behavior. However, this embodiment of the present invention is not limited thereto.

It is assumed that the target user behavior has only two categories, that is, being the target user behavior and not being the target user behavior. For example, the target user behavior is walking, and two categories of walking are respectively walking and not walking. Further, the feature of the target user behavior may include three-dimensional components of an acceleration, time, or place, where the time and the three-dimensional components of an acceleration may have discrete feature values, while the place may have continuous feature values. However, this embodiment of the present invention is not limited thereto.

Optionally, the expected value of the normal distribution parameter may include at least one of the following parameters: an expected value of standard deviations of the first feature for each category of the target user behavior on the multiple other UEs, and an expected value of a difference between a value of the first feature for a first category of the target user behavior and a value of the first feature for a second category of the target user behavior on the multiple other UEs. Specifically, in the naive Bayes classifier, it is generally assumed that distribution functions of a feature with continuous feature values for all categories are all normal distribution (or called Gaussian distribution). If a feature aⱼ has continuous feature values, *P*(*aⱼ*|*yᵢ*)=*g*(*aⱼ*,*µ_{yᵢ}*,*σ_{yi}*), where *P*(*aⱼ*|*yᵢ*) indicates a conditional probability of the feature aⱼ for a category yᵢ, *g*(*aⱼ*,*µ_{yᵢ}*,*σ_{yi}*) indicates a distribution function of the feature aⱼ for the category yᵢ, and *g*(*x*,*µ*,*σ*) has the following form: $g \left(x, μ, σ\right) = \frac{1}{\sqrt{2 πσ}} {e}^{- \frac{{\left(x-μ\right)}^{2}}{2 {σ}^{2}}}$ (1) where µ is an expected value of x, and σ is a standard deviation of x. It may be determined that for each UE in the multiple other UEs, a distribution curve of the first feature for each category of the target user behavior is a value of σ of the first feature for each category, where the value is corresponding to each of the other UEs, and the values of σ in all categories are averaged on the multiple other UEs, to obtain an expected value of standard deviations of the first feature for all categories. Generally, if the feature aⱼ is an important feature for recognizing the target user behavior, standard deviations of the feature aⱼ for all categories of the target user behavior are all relatively small. However, if the feature aⱼ is an unimportant feature for recognizing the target user behavior, a standard deviation of the feature aⱼ for at least one category of the target user behavior is relatively large. Accordingly, the first UE may determine, according to the expected value of the standard deviation of the first feature, which feature of the target user behavior is an important feature for recognizing the target user behavior, and create the behavior recognition model of the target user behavior according to the feature of the target user behavior. However, this embodiment of the present invention is not limited thereto.

Similarly, a value of µ of the first feature for each category may be determined and a difference of the values of µ for all categories is obtained, where the value of µ is corresponding to each of the other UEs. Specifically, for example, the target user behavior includes two categories: a first category and a second category. The behavior recognition server may subtract a value of µ of the first feature for the second category from a value of µ of the first feature for the first category, to obtain a difference of the values of µ of the first feature for the two categories, and then, the behavior recognition server averages differences of the values of µ on the multiple other UEs, and finally, a difference of expected values of the first feature for the first category and the second category is obtained and used as the statistical distribution information of the target parameter corresponding to the target user behavior. However, this embodiment of the present invention is not limited thereto.

Optionally, as another embodiment, in the naive Bayes classifier, if the second feature has discrete feature values, a distribution situation of discrete values of the second feature for each category of the target user behavior may be determined according to a behavior recognition model of the target user behavior that is corresponding to each UE in the multiple other UEs, where the discrete values are corresponding to each of the other UEs. Specifically, statistics on probabilities of the discrete values of the second feature for each category may be collected, to obtain a distribution curve of the discrete values of the second feature for each category, and then, mathematical statistics may be collected on a distribution curve of the second feature for each category on the multiple other UEs, to obtain a statistical distribution curve of the second feature for each category. Accordingly, the first UE may use a shape of the statistical distribution curve of the second feature as a shape of a distribution curve of the second feature in a behavior recognition model of the first UE, and determine the distribution curve of the second feature according to collected sensing data. However, this embodiment of the present invention is not limited thereto.

Optionally, as another embodiment, if the behavior recognition model of the target user behavior is a logistic regression model, and it is assumed that two categories C₁ and C₂ of the target user behavior respectively represent being the target user behavior and not being the target user behavior, probabilities that one feature occurs in the two categories may be determined by using the following formulas: $p \left({C}_{1}\left|Φ\right.\right) = {W}_{0} + σ \left({W}^{T}Φ\right)$ (2) $p \left({C}_{2}\left|Φ\right.\right) = 1 - p \left({C}_{1}\left|Φ\right.\right)$ (3) where Φ =(Φ₁,...,Φ*_{M}*)*^{T}* is a feature vector, *W*=(*W*₁,...,*W*_{*M*-1})*^{T}* is a weight vector, a component Wᵢ represents a weight of Φ*ᵢ*, and W₀ represents a deviation. The statistical distribution information of the target parameter may include statistical distribution information of a weight of a feature for each category, for example, an expected value of a weight of the feature for one category. However, this embodiment of the present invention is not limited thereto.

The multiple other UEs send behavior recognition models of the target user behavior that are respectively determined by the multiple other UEs to the behavior recognition server, and the behavior recognition server determines the statistical distribution information of the target parameter according to the behavior recognition models sent by the multiple other UEs. In this case, the first UE may acquire the statistical distribution information of the target parameter from the behavior recognition server. Accordingly, in S110, that the first user equipment acquires the statistical distribution information of the target parameter corresponding to the target user behavior includes:
sending, by the first user equipment, a data download request to the behavior recognition server, where the data download request includes an identifier of the target user behavior; and
receiving, by the first user equipment, the statistical distribution information of the target parameter that is determined by the behavior recognition server according to the identifier of the target user behavior, where the statistical distribution information of the target parameter is determined by the behavior recognition server according to the values of the target parameter in the multiple behavior recognition models of the target user behavior that are sent by the multiple other user equipments to the behavior recognition server.

When needing to create the behavior recognition model of the target user behavior, the first UE may request, by sending the data download request that carries the identifier of the target user behavior to the behavior recognition server, the statistical distribution information of the target parameter corresponding to the target user behavior from the behavior recognition server, where the data download request may carry the identifier of the target user behavior, such as a name or a serial number of the target user behavior. This embodiment of the present invention is not limited thereto. The behavior recognition server may determine, according to the identifier of the target user behavior, the statistical distribution information of the target parameter corresponding to the target user behavior, and return the determined statistical distribution information of the target parameter to the first UE.

Optionally, the behavior recognition server may include one empirical knowledge base, where the empirical knowledge base is used to store statistical distribution information of a target parameter corresponding to at least one user behavior including the target user behavior. Optionally, as another embodiment, the behavior recognition server may also group UEs, and determine, for each user group, the statistical distribution information of the target parameter corresponding to the target user behavior. The multiple user groups may be preset, or UEs may be grouped according to one or more factors such as an occupation, an age, a gender, and a residence that are of a user of a UE. For example, the behavior recognition server groups the UEs into four categories according to the gender and the age of the user of the UE, that is, a UE whose user is an adult male, a UE whose user is an adult female, a UE whose user is an underage male, and a UE whose user is an underage female. When executing a same behavior, users of UEs in each user group have a similar behavior characteristic; while when executing a same behavior, users of UEs in each user group have a different behavior characteristic from users of UEs in another user group. Optionally, in the foregoing example, another grouping manner may be further used. This embodiment of the present invention is not limited thereto.

The behavior recognition server may include one basic knowledge base and multiple coordinated knowledge bases, where the basic knowledge base is used to store statistical distribution information of a target parameter corresponding to at least one user behavior, where the statistical distribution information is commonly used by multiple user groups, and each coordinated knowledge base in the multiple coordinated knowledge bases is used to store statistical distribution information of a target parameter corresponding to at least one user behavior, where the statistical distribution information is exclusively used by one user group in the multiple user groups, and the at least one user behavior includes the target user behavior. It is assumed that the multiple other UEs may be grouped into two user groups: a first user group and a second user group. Accordingly, the behavior recognition server may have one basic knowledge base and two coordinated knowledge bases. The behavior recognition server may determine, according to values of the target parameter that are respectively corresponding to multiple other UEs belonging to the first user group, statistical distribution information of the target parameter corresponding to the target user behavior, where the statistical distribution information is stored in a first coordinated knowledge base corresponding to the first user group, determine, according to values of the target parameter that are respectively corresponding to multiple other UEs belonging to the second user group, statistical distribution information of the target parameter corresponding to the target user behavior, where the statistical distribution information is stored in a first coordinated knowledge base corresponding to the second user group, and determine, according to values of the target parameter that are respectively corresponding to other UEs belonging to the first user group and the second user group except the first UE, statistical distribution information of the target parameter corresponding to the target user behavior, where the statistical distribution information is stored in the basic knowledge base. However, this embodiment of the present invention is not limited thereto.

If the behavior recognition server includes a basic knowledge base and multiple coordinated knowledge bases, when receiving the data download request sent by the first UE, the behavior recognition server may determine a user group to which the first UE belongs. If the behavior recognition server determines that the first UE belongs to a first user group in user groups that are respectively corresponding to the multiple coordinated knowledge bases, the behavior recognition server may determine, from a coordinated knowledge base corresponding to the first user group, the statistical distribution information of the target parameter corresponding to the target user behavior. However, if the behavior recognition server determines that the first UE does not belong to any user group in the user groups corresponding to the coordinated knowledge bases, the behavior recognition server may determine, from the basic knowledge base, the statistical distribution information of the target parameter corresponding to the target user behavior. This embodiment of the present invention is not limited thereto. In this way, the first UE creates the behavior recognition model of the target user behavior according to the statistical distribution information of the target parameter that is determined according to a value of the target parameter that is corresponding to another UE belonging to a same group as the first UE, which can further improve accuracy of the behavior recognition model created by the first UE.

Optionally, the behavior recognition server may determine the user group of the first UE in multiple manners. For example, the behavior recognition server may determine the user group of the first UE according to user data uploaded by the first UE. In this case, if the first UE has sent user data to the behavior recognition server, the behavior recognition server may determine the user group of the first UE according to the user data sent by the first UE; otherwise, if the first UE has not sent user data to the behavior recognition server, the behavior recognition server cannot determine the user group of the first UE, that is, the first UE does not belong to any user group in the current multiple user groups. However, this embodiment of the present invention is not limited thereto.

Optionally, as another embodiment, in S110, that the first user equipment acquires the statistical distribution information of the target parameter corresponding to the target user behavior includes:
receiving, by the first user equipment, the behavior recognition models of the target user behavior that are respectively sent by the multiple other user equipments; and
determining, by the first user equipment, the statistical distribution information of the target parameter according to the values of the target parameter in the received multiple behavior recognition models of the target user behavior.

The multiple other UEs may actively send, to the first UE, the behavior recognition models of the target user behavior that are respectively created by the multiple other UEs; or the multiple other UEs send the behavior recognition models to the first UE according to a request of the first UE. This embodiment of the present invention is not limited thereto. After receiving the behavior recognition models of the target user behavior that are respectively sent by the multiple other UEs, the first UE may determine a value of the target parameter that is corresponding to each UE in the multiple other UEs, and collect statistics on the values of the target parameter that are respectively corresponding to the multiple UEs, to determine the statistical distribution information of the target parameter.

In this embodiment of the present invention, the first UE may determine, in multiple manners, that a new behavior recognition model needs to be created. Optionally, various sensors such as a gyroscope, a locator, an acceleration sensor, and a light sensor may be configured on the first UE. At a moment, a sensor configured on the first UE may collect a group of sensing data, and the first UE may determine, according to the collected sensing data and at least one existing behavior recognition model, at least one user behavior corresponding to the sensing data. For example, the first UE inputs the collected sensing data to at least one behavior recognition model in a current behavior recognition model base, to determine whether the collected sensing data is corresponding to a user behavior specific to each behavior recognition model in the at least one behavior recognition model, and then, the first UE may summarize and display a result of the at least one behavior recognition model, and inquire whether a user approves the currently displayed result. If the user approves or tacitly approves the displayed result, a behavior recognition procedure of the first UE ends; if the user does not approve the displayed result and enters a user instruction, where the user instruction indicates an actual behavior of the user, the UE determines whether a behavior recognition model of the actual behavior exists in the current behavior recognition model base, and if the behavior recognition model of the actual behavior does not exist in the current behavior recognition model base, the UE determines that a new behavior recognition model needs to be created. In this case, the target user behavior is the actual behavior of the user. However, this embodiment of the present invention is not limited thereto.

Optionally, as another embodiment, before S110, the method 100 further includes:
collecting data by using a sensor of the first user equipment;
determining at least one user behavior according to at least one existing behavior recognition model and the data collected by the sensor;
receiving a user instruction, where the user instruction indicates the target user behavior;
if the target user behavior is different from the at least one determined user behavior, determining whether the behavior recognition model of the target user behavior exists; and
if the behavior recognition model of the target user behavior does not exist, executing S110.

Optionally, as another embodiment, if the behavior recognition model of the target user behavior exists in the first UE, the first UE may further update the behavior recognition model of the target user behavior according to the collected sensing data.

Optionally, as another embodiment, after the first UE creates the behavior recognition model of the target user behavior according to the statistical distribution information of the target parameter corresponding to the target user behavior, the first UE may further send the created behavior recognition model to the behavior recognition server, so that the behavior recognition server updates the statistical distribution information of the target parameter according to the behavior recognition model sent by the first UE; or the first UE may also send the created behavior recognition model to the multiple other UEs, so that the multiple other UEs updates, according to the behavior recognition model sent by the first UE, the behavior recognition models of the target user behavior that are respectively corresponding to the multiple other UEs. However, this embodiment of the present invention is not limited thereto.

Optionally, every time after newly creating or updating one behavior recognition model, the first UE may send the behavior recognition model to the behavior recognition server. Alternatively, the first UE may periodically send, to the behavior recognition server, a behavior recognition model that has been newly created or updated in this period. In this case, before the first UE sends the created behavior recognition model to the behavior recognition server, the first UE may further determine whether a time interval for sending a behavior recognition model exceeds a preset sending period, and if the first UE determines that the time interval for sending a behavior recognition model exceeds the preset sending period, the first UE sends the created behavior recognition model of the target user behavior to the behavior recognition server.

The preset sending period may be in a unit of day or month, and the preset sending period may be set by a user. However, this embodiment of the present invention is not limited thereto.

Optionally, as another embodiment, the first UE may further send user data to the behavior recognition server, so that the behavior recognition server determines the user group of the first UE according to the sent user data. Optionally, the user data may include any data that can enable the behavior recognition server to determine the user group of the first UE. For example, the user data may include the sensing data collected by the first UE and the target user behavior corresponding to the sensing data, or may include an age, a gender, a profession, a residence, and the like of a user of the first UE. This embodiment of the present invention is not limited thereto.

Therefore, according to the user behavior recognition method in this embodiment of the present invention, a user equipment creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user behavior recognition method in this embodiment of the present invention can improve efficiency and accuracy of creating a behavior recognition model, thereby enhancing user experience.

With reference to FIG. 1, the foregoing describes in detail the user behavior recognition method provided in the present invention from a perspective of a UE. With reference to FIG. 2, the following describes in detail the user behavior recognition method provided in the present invention from a perspective of a behavior recognition server.

FIG. 2 shows a schematic flowchart of a user behavior recognition method 200 according to another embodiment of the present invention. The method may be executed by a behavior recognition server. As shown in FIG. 2, the method 200 includes:
S210: A behavior recognition server receives a data download request sent by a first user equipment, where the data download request includes an identifier of a target user behavior.

S220: The behavior recognition server determines, according to the identifier of the target user behavior, statistical distribution information of a target parameter corresponding to the target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments. S230: The behavior recognition server sends the statistical distribution information of the target parameter to the first user equipment, so that the first user equipment creates the behavior recognition model of the target user behavior according to the statistical distribution information of the target parameter.

Therefore, according to the user behavior recognition method in this embodiment of the present invention, a user equipment creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user behavior recognition method in this embodiment of the present invention can improve efficiency and accuracy of creating a behavior recognition model, thereby enhancing user experience.

Optionally, the statistical distribution information of the target parameter includes at least one piece of the following information: a probability distribution curve of the target parameter, an expected value of the target parameter, and a value of the target parameter that has a largest occurrence probability.

Optionally, as another embodiment, if the behavior recognition model is a naive Bayes classifier, a first feature with continuous feature values in the naive Bayes classifier is a first target parameter, a second feature with discrete feature values in the naive Bayes classifier is a second target parameter, and the statistical distribution information of the target parameter includes at least one piece of the following information:
an expected value of a normal distribution parameter that the first feature has in each category of the target user behavior, and a statistical distribution curve of the second feature for each category of the target user behavior.

Optionally, the expected value of the normal distribution parameter may include at least one of the following values: an expected value of standard deviations of the first feature for each category of the target user behavior on the multiple other UEs, and an expected value of a difference between a value of the first feature for a first category of the target user behavior and a value of the first feature for a second category of the target user behavior on the multiple other UEs. However, this embodiment of the present invention is not limited thereto.

Optionally, the behavior recognition server may have one empirical knowledge base, where the empirical knowledge base is used to store statistical distribution information of a target parameter corresponding to at least one user behavior including the target user behavior. Accordingly, the behavior recognition server may determine, from the empirical knowledge base, the statistical distribution information of the target parameter corresponding to the target user behavior. Optionally, as another embodiment, the behavior recognition server may group UEs, and determine the statistical distribution information of the target parameter for each user group. Accordingly, the behavior recognition server has a basic knowledge base and multiple coordinated knowledge bases, where the basic knowledge base is used to store statistical distribution information of a target parameter corresponding to at least one user behavior, where the statistical distribution information is commonly used by multiple user groups, and each coordinated knowledge base in the multiple coordinated knowledge bases is used to store statistical distribution information of a target parameter corresponding to at least one user behavior, where the statistical distribution information is exclusively used by one user group in the multiple user groups, and the at least one user behavior includes the target user behavior.

Accordingly, in S220, that the behavior recognition server determines, according to the identifier of the target user behavior, statistical distribution information of a target parameter corresponding to the target user behavior includes:
determining, by the behavior recognition server, a user group of the first user equipment; and
if the first user equipment does not belong to any user group in the multiple user groups, determining, by the behavior recognition server from the basic knowledge base, the statistical distribution information of the target parameter corresponding to the target user behavior; or
if the first user equipment belongs to a first user group in the multiple user groups, determining, by the behavior recognition server from a coordinated knowledge base corresponding to the first user group, the statistical distribution information of the target parameter corresponding to the target user behavior.

The multiple user groups may be preset, or UEs may be grouped according to one or more factors such as a profession, an age, a gender, or a residence of a user of a UE. The behavior recognition server may also determine the user group of the first UE in multiple manners. Optionally, the behavior recognition server may determine the user group of the first UE according to user data uploaded by the first UE. In this case, if the first UE has sent user data to the behavior recognition server, the behavior recognition server may determine the user group of the first UE according to the user data sent by the first UE; otherwise, if the first UE has not sent user data to the behavior recognition server, the behavior recognition server cannot determine the user group of the first UE, that is, the first UE does not belong to any user group in the current multiple user groups. However, this embodiment of the present invention is not limited thereto.

Optionally, as another embodiment, the method 200 further includes:
receiving, by the behavior recognition server, the behavior recognition model of the target user behavior that is created by the first user equipment according to the statistical distribution information of the target parameter and sent by the first user equipment; and
updating, by the behavior recognition server, the statistical distribution information of the target parameter according to the behavior recognition model sent by the first user equipment.

Optionally, the updating, by the behavior recognition server, the statistical distribution information of the target parameter according to the behavior recognition model sent by the first user equipment includes:
determining, by the behavior recognition server according to the behavior recognition model sent by the first user equipment, a value of the target parameter that is corresponding to the first user equipment; and
collecting, by the behavior recognition server, mathematical statistics on a value of the target parameter according to the values of the target parameter that are respectively corresponding to the multiple other user equipments, and the value of the target parameter that is corresponding to the first user equipment, and determining that a statistical result is updated statistical distribution information of the target parameter.

Optionally, as another embodiment, if the behavior recognition server has a basic knowledge base and multiple coordinated knowledge bases, the behavior recognition server may update, according to the behavior recognition model sent by the first UE, the basic knowledge base and/or a coordinated knowledge base corresponding to the user group to which the first UE belongs. However, this embodiment of the present invention is not limited thereto.

Optionally, as another embodiment, the method 200 further includes:
receiving user data sent by the first UE; and
determining the user group of the first UE according to the user data sent by the first UE.

Optionally, as another embodiment, before S210, the method 200 further includes:
receiving, by the behavior recognition server, the behavior recognition models of the target user behavior that are respectively sent by the multiple other user equipments;
determining, by the behavior recognition server according to the behavior recognition models of the target user behavior that are respectively sent by the multiple other user equipments, the values of the target parameter that are respectively corresponding to the multiple other user equipments; and
determining, by the behavior recognition server, the statistical distribution information of the target parameter according to the values of the target parameter that are respectively corresponding to the multiple other user equipments.

Specifically, the behavior recognition server may acquire a behavior recognition model of the target user behavior that is sent by each UE in the multiple other UEs and corresponding to each of the other UEs, determine, according to the behavior recognition model of the target user behavior that is sent by each of the other UEs, a value of a target parameter that is corresponding to each of the other UEs, and determine the statistical distribution information of the target parameter by collecting statistics on the values of the target parameter that are respectively corresponding to the multiple other UEs. However, this embodiment of the present invention is not limited thereto.

Optionally, as another embodiment, if the behavior recognition server includes multiple coordinated knowledge bases, when determining the statistical distribution information of the target parameter corresponding to the target user behavior, the behavior recognition server may determine, for each user group, the statistical distribution information of the target parameter corresponding to the target user behavior, and save, in one coordinated knowledge base in the multiple coordinated knowledge bases, the statistical distribution information of the target parameter that is corresponding to each user group. Accordingly, the determining, by the behavior recognition server, the statistical distribution information of the target parameter according to the values of the target parameter that are respectively corresponding to the multiple other user equipments includes:
determining, by the behavior recognition server, at least one other UE in the multiple other UEs that belongs to a first user group; and
determining, according to a value of the target parameter that is corresponding to the at least one other UE, statistical distribution information of the target parameter that is stored in a first coordinated knowledge base, where the first coordinated knowledge base is used to store statistical distribution information of the target parameter that is corresponding to the first user group.

Therefore, according to the user behavior recognition method in this embodiment of the present invention, a user equipment creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user behavior recognition method in this embodiment of the present invention can improve efficiency and accuracy of creating a behavior recognition model, thereby enhancing user experience.

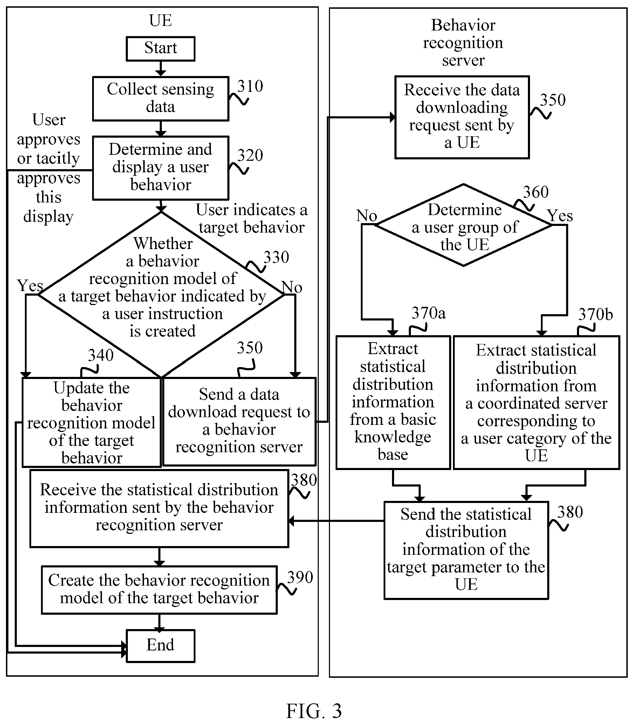

With reference to a specific example, the following provides a more detailed description of the user behavior recognition method provided in this embodiment of the present invention. FIG. 3 shows a schematic flowchart of a user behavior recognition method 300 according to another embodiment of the present invention. As shown in FIG. 3, the method 300 includes:
S310: A UE collects sensing data.

Specifically, each sensor configured on the UE may collect sensing data that exists at a specific moment.

S320: The UE determines and displays, according to the collected sensing data and at least one existing behavior recognition model, at least one user behavior corresponding to the collected sensing data.

The UE inputs the sensing data to at least one behavior recognition model in a current behavior recognition model base, to determine a current behavior of a user according to an output result of the at least one behavior recognition model. The UE displays the at least one determined user behavior. If the user approves or tacitly approves the displayed user behavior, a procedure of the method 300 ends; if the user does not approve the displayed user behavior and designates a target user behavior, where the target user behavior is different from the displayed user behavior, the UE executes S330.

S330: The UE determines whether there is a behavior recognition model of a target user behavior indicated by a user instruction.

If the UE has already created the behavior recognition model of the target user behavior, the first UE executes S340; if the UE has not created the behavior recognition model of the target user behavior, the UE executes S350.

S340: The UE updates the behavior recognition model of the target user behavior according to the collected sensing data and the target user behavior indicated by the user instruction.

S350: The UE sends a data download request to a behavior recognition server and the behavior recognition server receives the data download request, where the data download request carries an identifier of the target user behavior. S360: The behavior recognition server determines a user group of the UE.

If the UE does not belong to any user group in current multiple user groups, the behavior recognition server may execute S370a and S380; if the UE belongs to a user group in current multiple user groups, the behavior recognition server executes S370b and S380.

S370a: If the behavior recognition server extracts, from a basic knowledge base, statistical distribution information of a target parameter corresponding to the target user behavior.

The basic knowledge base stores statistical distribution information of a target parameter corresponding to at least one behavior, where the at least one behavior includes the target user behavior.

S370b: The behavior recognition server extracts, from a coordinated knowledge base corresponding to a user group to which the UE belongs, statistical distribution information of a target parameter corresponding to the target user behavior.

S380: The behavior recognition server sends the statistical distribution information of the target parameter to the UE, and the UE receives the statistical distribution information of the target parameter that is sent by the behavior recognition server.

S390: The UE creates the behavior recognition model of the target user behavior according to the statistical distribution information of the target parameter and the collected sensing data.

Therefore, according to the user behavior recognition method in this embodiment of the present invention, a user equipment creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user behavior recognition method in this embodiment of the present invention can improve efficiency and accuracy of creating a behavior recognition model, thereby enhancing user experience.

It should be noted that the example in FIG. 3 is merely intended to help a person skilled in the art better understand embodiments of the present invention, instead of limiting a scope of the embodiments of the present invention as defined in the claims.

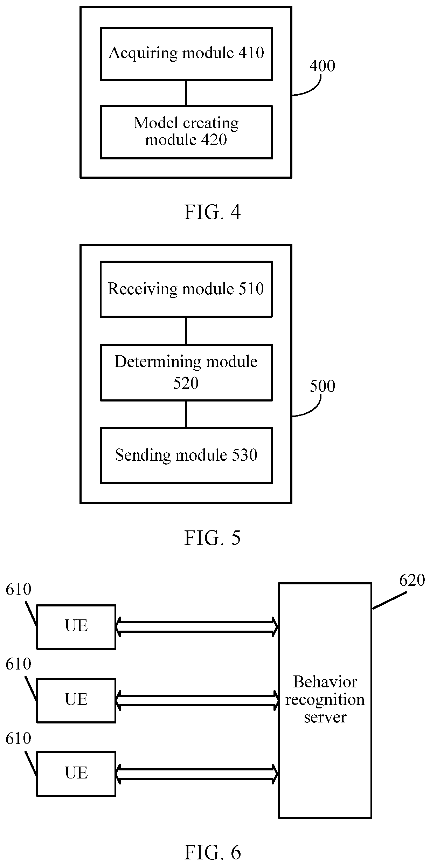

It should be understood that sequence numbers of the foregoing processes do not mean execution sequences. The execution sequences of the processes should be determined according to functions and internal logic of the processes, and shall not be construed as any limitation on implementation processes of the embodiments of the present invention. With reference to FIG. 1 to FIG. 3, the foregoing describes in detail the user behavior recognition methods according to the embodiments of the present invention. With reference to FIG. 4 to FIG. 8, the following describes in detail a user equipment, a behavior recognition server, and a behavior recognition system according to the embodiments of the present invention.

FIG. 4 shows a schematic block diagram of a user equipment 400 according to an embodiment of the present invention. As shown in FIG. 4, the user equipment 400 includes:
an acquiring module 410, configured to acquire statistical distribution information of a target parameter corresponding to a target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and
a model creating module 420, configured to create and save, according to the statistical distribution information of the target parameter that is acquired by the acquiring module 410, a behavior recognition model of the target user behavior that is corresponding to the user equipment, to recognize the target user behavior.

Therefore, the user equipment in this embodiment of the present invention creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user equipment in this embodiment of the present invention can improve efficiency and accuracy of creating a behavior recognition model, thereby enhancing user experience.

Optionally, the statistical distribution information of the target parameter includes at least one piece of the following information: a probability distribution curve of the target parameter, an expected value of the target parameter, and a value of the target parameter that has a largest occurrence probability.

Optionally, as another embodiment, if the behavior recognition model is a naive Bayes classifier, a first feature with continuous feature values in the naive Bayes classifier is a first target parameter, a second feature with discrete feature values in the naive Bayes classifier is a second target parameter, and the statistical distribution information of the target parameter includes at least one piece of the following information:
an expected value of a normal distribution parameter that the first feature has in each category of the target user behavior, and a statistical distribution curve of the second feature for each category of the target user behavior. Optionally, as another embodiment, the acquiring module 410 includes:
a first sending unit, configured to send a data download request to a behavior recognition server, where the data download request includes an identifier of the target user behavior; and
a first receiving unit, configured to receive the statistical distribution information of the target parameter that is determined by the behavior recognition server according to the identifier of the target user behavior that is sent by the first sending unit, where the statistical distribution information of the target parameter is determined by the behavior recognition server according to the values of the target parameter in the multiple behavior recognition models of the target user behavior that are sent by the multiple other user equipments to the behavior recognition server.

Optionally, as another embodiment, the acquiring module 410 includes:
a second receiving unit, configured to receive the behavior recognition models of the target user behavior that are respectively sent by the multiple other user equipments; and
a determining unit, configured to determine the statistical distribution information of the target parameter according to the values of the target parameter in the multiple behavior recognition models of the target user behavior that are received by the second receiving unit.

Optionally, as another embodiment, the user equipment 400 further includes:
a sending module, configured to send the behavior recognition model of the target user behavior that is created by the model creating module 420 to the behavior recognition server, so that the behavior recognition server updates the statistical distribution information of the target parameter according to the behavior recognition model; or
the sending module is configured to send the behavior recognition model of the target user behavior that is created by the model creating module 420 to another user equipment, so that the another UE updates the statistical distribution information of the target parameter according to the behavior recognition model.

The user equipment 400 according to this embodiment of the present invention may be corresponding to the first user equipment in the user behavior recognition methods according to the embodiments of the present invention, and the foregoing and other operations and/or functions of modules in the user equipment 400 are used to implement corresponding procedures of the methods in FIG. 1 to FIG. 3. For brevity, details are not described herein again. Therefore, the user equipment for user behavior recognition in this embodiment of the present invention creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user equipment in this embodiment of the present invention can improve efficiency and accuracy of creating a behavior recognition model, thereby enhancing user experience. FIG. 5 shows a schematic block diagram of a behavior recognition server 500 according to an embodiment of the present invention. As shown in FIG. 5, the behavior recognition server 500 includes:
a receiving module 510, configured to receive a data download request sent by a first user equipment, where the data download request includes an identifier of a target user behavior;
a determining module 520, configured to determine, according to the identifier of the target user behavior that is received by the receiving module 510, statistical distribution information of a target parameter corresponding to the target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and
a sending module 530, configured to send, to the first user equipment, the statistical distribution information of the target parameter that is determined by the determining module 520, so that the first user equipment creates the behavior recognition model of the target user behavior according to the statistical distribution information of the target parameter.

Therefore, the behavior recognition server according to this embodiment of the present invention determines, according to values of a target parameter that are respectively corresponding to multiple user equipments, statistical distribution information of the target parameter corresponding to a target user behavior, and sends the statistical distribution information of the target parameter corresponding to the target user behavior to a user equipment according to a request of the user equipment, which can improve efficiency and accuracy of creating a behavior recognition model, thereby enhancing user experience.

Optionally, the statistical distribution information of the target parameter includes at least one piece of the following information: a probability distribution curve of the target parameter, an expected value of the target parameter, and a value of the target parameter that has a largest occurrence probability.

Optionally, as another embodiment, if the behavior recognition model of the target user behavior is a naive Bayes classifier, a first feature with continuous feature values in the naive Bayes classifier is a first target parameter, a second feature with discrete feature values in the naive Bayes classifier is a second target parameter, and the statistical distribution information of the target parameter includes at least one piece of the following information: an expected value of a normal distribution parameter that the first feature has in each category of the target user behavior, and a statistical distribution curve of the second feature for each category of the target user behavior.

Optionally, as another embodiment, the behavior recognition server has a basic knowledge base and multiple coordinated knowledge bases, where the basic knowledge base is used to store statistical distribution information of a target parameter corresponding to at least one user behavior, where the statistical distribution information is commonly used by multiple user groups, and each coordinated knowledge base in the multiple coordinated knowledge bases is used to store statistical distribution information of a target parameter corresponding to at least one user behavior, where the statistical distribution information is exclusively used by one user group in the multiple user groups.

Accordingly, the determining module 520 includes:
a first determining unit, configured to determine a user group of the first user equipment; and
a second determining unit, configured to: if the first determining unit determines that the first user equipment does not belong to any user group in the multiple user groups, determine, by the behavior recognition server from the basic knowledge base, the statistical distribution information of the target parameter corresponding to the target user behavior, or
a third determining unit, configured to: if the first determining unit determines that the first user equipment belongs to a first user group in the multiple user groups, determine, by the behavior recognition server from a coordinated knowledge base corresponding to the first user group, the statistical distribution information of the target parameter corresponding to the target user behavior.

Optionally, as another embodiment, the receiving module 510 is further configured to receive the behavior recognition model of the target user behavior that is sent by the first user equipment and created by the first user equipment according to the statistical distribution information of the target parameter that is sent by the sending module 530. Accordingly, the behavior recognition server 500 further includes an updating module, configured to update the statistical distribution information of the target parameter according to the behavior recognition model that is sent by the first user equipment and received by the receiving module 510.

Optionally, as another embodiment, the updating module includes:
a fourth determining unit, configured to determine, according to the behavior recognition model that is sent by the first user equipment and received by the receiving module 510, a value of the target parameter that is corresponding to the first user equipment; and
a statistics collecting unit, configured to: collect mathematical statistics on a value of the target parameter according to the values of the target parameter that are respectively corresponding to the multiple other user equipments, and the value of the target parameter that is corresponding to the first user equipment and determined by the fourth determining unit, and determine that a statistical result is updated statistical distribution information of the target parameter.

Optionally, as another embodiment, the receiving module 510 is further configured to receive, before receiving the data download request sent by the first user equipment, the behavior recognition models of the target user behavior that are respectively sent by the multiple other user equipments; and
the determining module 520 is further configured to: determine, according to the behavior recognition models of the target user behavior that are respectively sent by the multiple other user equipments and received by the receiving module 510, the values of the target parameter that are respectively corresponding to the multiple other user equipments, and determine the statistical distribution information of the target parameter according to the values of the target parameter that are respectively corresponding to the multiple other user equipments.

The behavior recognition server 500 according to this embodiment of the present invention may be corresponding to the behavior recognition server in the user behavior recognition methods according to the embodiments of the present invention, and the foregoing and other operations and/or functions of modules in the behavior recognition server 500 are used to implement corresponding procedures of the methods in FIG. 1 to FIG. 3. For brevity, details are not described herein again.

Therefore, the behavior recognition server according to this embodiment of the present invention determines, according to values of a target parameter that are respectively corresponding to multiple user equipments, statistical distribution information of the target parameter corresponding to a target user behavior, and sends the statistical distribution information of the target parameter corresponding to the target user behavior to a user equipment according to a request of the user equipment, which can improve efficiency and accuracy of creating a behavior recognition model, thereby enhancing user experience.

FIG. 6 is a schematic diagram of a network architecture of a behavior recognition system 600 according to an embodiment of the present invention. The behavior recognition system 600 includes multiple user equipments 610 and a behavior recognition server 620, where:
a first user equipment 610 in the multiple user equipments 610 is configured to send a data download request to the behavior recognition server 620, where the data download request includes an identifier of a target user behavior;
the behavior recognition server 620 is configured to: determine, according to the identifier of the target user behavior, statistical distribution information of a target parameter corresponding to the target user behavior, and send the statistical distribution information of the target parameter to the first user equipment, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and
the first user equipment 610 is further configured to: receive the statistical distribution information of the target parameter that is sent by the behavior recognition server 620, and create and save, according to the statistical distribution information of the target parameter, a behavior recognition model of the target user behavior that is corresponding to the first user equipment, to recognize the target user behavior.

Specifically, after creating or updating a behavior recognition model of one user behavior, some or all user equipments in the multiple user equipments 610 sends the created or updated behavior recognition model to the behavior recognition server 620, and the behavior recognition server 620 may determine the statistical distribution information of the target parameter according to received multiple behavior recognition models of one user behavior, and save the statistical distribution information of the target parameter in an empirical knowledge base. When a UE in the multiple user equipments 610 needs to newly create a behavior recognition model of this user behavior, the UE may request statistical distribution information of a target parameter corresponding to this user behavior from the behavior recognition server 620, and creates the behavior recognition model of this user behavior according to the statistical distribution information of the target parameter.

Optionally, the behavior recognition server 620 may further divide the multiple user equipments 610 into multiple user groups, and store statistical distribution information of a target parameter corresponding to at least one user behavior for each user group in the multiple user groups. In this way, the behavior recognition server 620 may include one basic knowledge base and multiple coordinated knowledge bases, where the basic knowledge base is used to store statistical distribution information of the target parameter corresponding to the target user behavior, where the statistical distribution information is commonly used by the multiple user groups, and each coordinated knowledge base in the multiple coordinated knowledge bases is used to store statistical distribution information of the target parameter corresponding to the target user behavior, where the statistical distribution information is exclusively used by one user group. However, this embodiment of the present invention is not limited thereto.

Optionally, as another embodiment, the statistical distribution information of the target parameter includes at least one piece of the following information: a probability distribution curve of the target parameter, an expected value of the target parameter, and a value of the target parameter that has a largest occurrence probability.

Optionally, as another embodiment, the behavior recognition server 620 may further update, periodically or in a triggered manner, statistical distribution information of a target parameter corresponding to one user behavior. For example, the behavior recognition server 620 may update the statistical distribution information of the target parameter corresponding to this user behavior at an internal of dozens of days, or may update the statistical distribution information of the target parameter corresponding to this user behavior each time when receiving a behavior recognition model sent by a UE in the multiple user equipments 610, or update the statistical distribution information of the target parameter corresponding to this user behavior when a quantity of received behavior recognition models of this user behavior exceeds a threshold. This embodiment of the present invention is not limited thereto.

Therefore, according to the behavior recognition system in this embodiment of the present invention, a behavior recognition server determines, according to values of a target parameter that are respectively corresponding to multiple user equipments, statistical distribution information of the target parameter corresponding to a target user behavior, and sends the statistical distribution information of the target parameter corresponding to the target user behavior to a user equipment according to a request of the user equipment. The user equipment creates a behavior recognition model of the target user behavior according to the statistical distribution information of the target parameter that is sent by the behavior recognition server. Compared with the prior art in which a behavior recognition module of the target user behavior is created by using a large amount of training data, the behavior recognition system in this embodiment of the present invention can improve efficiency and accuracy of creating a behavior recognition model, thereby enhancing user experience.

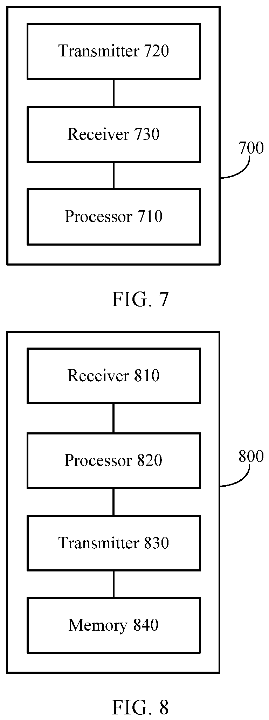

FIG. 7 shows a schematic block diagram of a user equipment 700 according to another embodiment of the present invention. As shown in FIG. 7, the user equipment 700 includes: a processor 710, configured to: acquire statistical distribution information of a target parameter corresponding to a target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and create and save, according to the statistical distribution information of the target parameter, a behavior recognition model of the target user behavior that is corresponding to the user equipment, to recognize the target user behavior.

Therefore, the user equipment in this embodiment of the present invention creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user equipment in this embodiment of the present invention can improve efficiency and accuracy of creating a behavior recognition model, thereby enhancing user experience.

It should be understood that in this embodiment of the present invention, the processor 710 may be a central processing unit (Central Processing Unit, "CPU" for short), or the processor 710 may be another general-purpose processor, a digital signal processor (Digital Signal Processor, "DSP" for short), an application-specific integrated circuit (Application Specific Integrated Circuit, "ASIC" for short), a field-programmable gate array (Field-Programmable Gate Array, "FPGA" for short), another programmable logic device, a discrete gate or transistor logic device, a discrete hardware component, or the like. The general-purpose processor may be a microprocessor, or the processor may be any conventional processor or the like.

Optionally, the apparatus 700 may further include a memory, and the memory may include a read-only memory and a random access memory, and provide data and an instruction for the processor 710. A part of the memory may further include a non-volatile random access memory. For example, the memory may further store information about a device type.

During an implementation process, the steps in the foregoing methods may be completed by means of an integrated logic circuit of hardware in the processor 710 or an instruction in a form of software. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor 710 reads information in the memory and completes the steps in the foregoing methods in combination with hardware of the processor 710. To avoid repetition, details are not described herein.

Optionally, the statistical distribution information of the target parameter includes at least one piece of the following information: a probability distribution curve of the target parameter, an expected value of the target parameter, and a value of the target parameter that has a largest occurrence probability.

Optionally, as another embodiment, if the behavior recognition model is a naive Bayes classifier, a first feature with continuous feature values in the naive Bayes classifier is a first target parameter, a second feature with discrete feature values in the naive Bayes classifier is a second target parameter, and the statistical distribution information of the target parameter includes at least one piece of the following information:
an expected value of a normal distribution parameter that the first feature has in each category of the target user behavior, and a statistical distribution curve of the second feature for each category of the target user behavior. Optionally, as another embodiment, as shown in FIG. 7, the user equipment 700 includes:
a transmitter 720, configured to send a data download request to a behavior recognition server, where the data download request includes an identifier of the target user behavior, and
a receiver 730, configured to receive the statistical distribution information of the target parameter that is determined by the behavior recognition server according to the identifier of the target user behavior that is sent by the transmitter 720, where the statistical distribution information of the target parameter is determined by the behavior recognition server according to the values of the target parameter in the multiple behavior recognition models of the target user behavior that are sent by the multiple other user equipments to the behavior recognition server.

Accordingly, the processor 710 is specifically configured to acquire, by using the receiver 730, the statistical distribution information of the target parameter corresponding to the target user behavior.

Optionally, as another embodiment, the user equipment 700 further includes a receiver 730, configured to receive the behavior recognition models of the target user behavior that are respectively sent by the multiple other user equipments. Accordingly, the processor 710 is specifically configured to determine the statistical distribution information of the target parameter according to the values of the target parameter in the multiple behavior recognition models of the target user behavior that are received by the receiver 730.

Optionally, as another embodiment, the user equipment 700 further includes:
a transmitter 720, configured to send the behavior recognition model of the target user behavior that is created by the model creating module to the behavior recognition server, so that the behavior recognition server updates the statistical distribution information of the target parameter according to the behavior recognition model, or
the transmitter 720 is configured to send the behavior recognition model of the target user behavior that is created by the processor 710 to another user equipment, so that the another user equipment updates the statistical distribution information of the target parameter according to the behavior recognition model.

The user equipment 700 according to this embodiment of the present invention may be corresponding to the first user equipment in the user behavior recognition methods according to the embodiments of the present invention, and the foregoing and other operations and/or functions of modules in the user equipment 700 are used to implement corresponding procedures of the methods in FIG. 1 to FIG. 3. For brevity, details are not described herein again.

Therefore, the user equipment for user behavior recognition in this embodiment of the present invention creates a behavior recognition model of a target user behavior according to statistical distribution information of a target parameter corresponding to the target user behavior, where the statistical distribution information of the target parameter is determined according to values of the target parameter that are respectively corresponding to multiple other user equipments. Compared with the prior art in which a behavior recognition module of the target user behavior is created by using a large amount of training data, the user equipment in this embodiment of the present invention can improve efficiency and accuracy of creating a behavior recognition model, thereby enhancing user experience. FIG. 8 shows a schematic block diagram of a behavior recognition server 800 according to an embodiment of the present invention. As shown in FIG. 8, the behavior recognition server 800 includes:
a receiver 810, configured to receive a data download request sent by a first user equipment, where the data download request includes an identifier of a target user behavior;
a processor 820, configured to determine, according to the identifier of the target user behavior that is received by the processor 810, statistical distribution information of a target parameter corresponding to the target user behavior, where the target parameter includes at least one parameter in a behavior recognition model of the target user behavior, and the statistical distribution information of the target parameter is determined according to values of the target parameter in behavior recognition models of the target user behavior that are respectively corresponding to multiple other user equipments; and
a transmitter 830, configured to send, to the first user equipment, the statistical distribution information of the target parameter that is determined by the processor 820, so that the first user equipment creates the behavior recognition model of the target user behavior according to the statistical distribution information of the target parameter.

Therefore, the behavior recognition server according to this embodiment of the present invention determines, according to values of a target parameter that are respectively corresponding to multiple user equipments, statistical distribution information of the target parameter corresponding to a target user behavior, and sends the statistical distribution information of the target parameter corresponding to the target user behavior to a user equipment according to a request of the user equipment, which can improve efficiency and accuracy of creating a behavior recognition model, thereby enhancing user experience.

As shown in FIG. 8, the behavior recognition server 800 may further include a memory 840, where the memory 840 includes an empirical knowledge base, which is used to store statistical distribution information of a target parameter corresponding to at least one user behavior including the target user behavior.

It should be understood that in this embodiment of the present invention, the processor 820 may be a central processing unit (Central Processing Unit, "CPU" for short), or the processor 820 may be another general-purpose processor, a digital signal processor (DSP), an application-specific integrated circuit (ASIC), a field-programmable gate array (FPGA), another programmable logic device, a discrete gate or transistor logic device, a discrete hardware component, or the like. The general-purpose processor may be a microprocessor, or the processor may be any conventional processor or the like.

Optionally, the memory 840 may include a read-only memory and a random access memory, and provide data and an instruction for the processor 820. A part of the memory may further include a non-volatile random access memory. For example, the memory 840 may further store information about a device type.

During an implementation process, the steps in the foregoing methods may be completed by means of an integrated logic circuit of hardware in the processor 820 or an instruction in a form of software. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor 820 reads information in the memory 840 and completes the steps in the foregoing methods in combination with hardware of the processor 840. To avoid repetition, details are not described herein.

Optionally, the statistical distribution information of the target parameter includes at least one piece of the following information: a probability distribution curve of the target parameter, an expected value of the target parameter, and a value of the target parameter that has a largest occurrence probability.

Optionally, as another embodiment, if the behavior recognition model of the target user behavior is a naive Bayes classifier, a first feature with continuous feature values in the naive Bayes classifier is a first target parameter, a second feature with discrete feature values in the naive Bayes classifier is a second target parameter, and the statistical distribution information of the target parameter includes at least one piece of the following information: an expected value of a normal distribution parameter that the first feature has in each category of the target user behavior, and a statistical distribution curve of the second feature for each category of the target user behavior.

Optionally, as another embodiment, the memory 840 includes a basic knowledge base and multiple coordinated knowledge bases, where the basic knowledge base is used to store statistical distribution information of a target parameter corresponding to at least one user behavior, where the statistical distribution information is commonly used by multiple user groups, and each coordinated knowledge base in the multiple coordinated knowledge bases is used to store statistical distribution information of a target parameter corresponding to at least one user behavior, where the statistical distribution information is exclusively used by one user group in the multiple user groups.

Accordingly, the processor 820 is specifically configured to determine a user group of the first user equipment; and if the first user equipment does not belong to any user group in the multiple user groups, determine, by the behavior recognition server from the basic knowledge base, the statistical distribution information of the target parameter corresponding to the target user behavior, or if the first user equipment belongs to a first user group in the multiple user groups, determine, by the behavior recognition server from a coordinated knowledge base corresponding to the first user group, the statistical distribution information of the target parameter corresponding to the target user behavior. Optionally, as another embodiment, the receiver 810 is further configured to receive the behavior recognition model of the target user behavior that is sent by the first user equipment and created by the first user equipment according to the statistical distribution information of the target parameter that is sent by the transmitter 830.

Accordingly, the processor 820 is further configured to update the statistical distribution information of the target parameter according to the behavior recognition model that is sent by the first user equipment and received by the receiver 810.

Optionally, as another embodiment, the processor 820 is specifically configured to: determine, according to the behavior recognition model sent by the first user equipment, a value of the target parameter that is corresponding to the first user equipment, collect mathematical statistics on a value of the target parameter according to the values of the target parameter that are respectively corresponding to the multiple other user equipments, and the value of the target parameter that is corresponding to the first user equipment, and determine that a statistical result is updated statistical distribution information of the target parameter.

Optionally, as another embodiment, the receiver 810 is further configured to receive, before receiving the data download request sent by the first user equipment, the behavior recognition models of the target user behavior that are respectively sent by the multiple other user equipments.

Accordingly, the processor 820 is further configured to: determine, according to the behavior recognition models of the target user behavior that are respectively sent by the multiple other user equipments and received by the receiver 810, the values of the target parameter that are respectively corresponding to the multiple other user equipments, and determine the statistical distribution information of the target parameter according to the values of the target parameter that are respectively corresponding to the multiple other user equipments.

The behavior recognition server 800 according to this embodiment of the present invention may be corresponding to the behavior recognition server in the user behavior recognition methods according to the embodiments of the present invention, and the foregoing and other operations and/or functions of modules in the behavior recognition server 800 are used to implement corresponding procedures of the methods in FIG. 1 to FIG. 3. For brevity, details are not described herein again.

Therefore, the behavior recognition server according to this embodiment of the present invention determines, according to values of a target parameter that are respectively corresponding to multiple user equipments, statistical distribution information of the target parameter corresponding to a target user behavior, and sends the statistical distribution information of the target parameter corresponding to the target user behavior to a user equipment according to a request of the user equipment, which can improve efficiency and accuracy of creating a behavior recognition model, thereby enhancing user experience.

It should be understood that, the term "and/or" in the embodiments of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it shall not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer apparatus (which may be a personal computer, a server, or a network apparatus) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention as defined in the attached claims.

## Claims

1. A user behavior recognition method, comprising:
receiving (230), by a first user equipment (400, 610, 700) of a first user, from a behavior recognition server (620) a statistical distribution information of a target parameter that is determined by the behavior recognition server (620), the statistical distribution information of the target parameter is determined according to values of the target parameter corresponding to multiple behavior recognition models of the target user behavior, the multiple behavior recognition models are sent by multiple other user equipments (610) of other users to the behavior recognition server (620); and
obtaining, by the first user equipment (400, 610, 700) according to the statistical distribution information of the target parameter received from the behavior recognition server (620), a behavior recognition model of the target user behavior corresponding to the first user equipment (400, 610, 700),
wherein the first user equipment (400, 610, 700) and the multiple other user equipments (610) are each configured to communicate with one or more core networks by using a radio access network and are each selected from the following group: a mobile phone, a computer with a mobile terminal, a in-vehicle mobile apparatus which exchanges voice and/or data with the radio access network.

2. The method according to claim 1, wherein the statistical distribution information of the target parameter which is determined according to the values of the target parameter corresponding to the multiple behavior recognition models of the target user behavior that are respectively corresponding to the multiple other user equipments (610) comprises at least one piece of the following information: a probability distribution curve of the target parameter, an expected value of the target parameter, and a value of the target parameter that has a largest occurrence probability.

3. The method according to claim 1 or 2, wherein the method further comprises:
collecting, by the first user equipment (400, 610, 700), sensing data,
determining, by the first user equipment (400, 610, 700), a target user behavior corresponding to the sensing data indicated by a user instruction,
updating, by the first user equipment (400, 610, 700) according to the sensing data and the target user behavior indicated by the user instruction, the behavior recognition model of the target user behavior corresponding to the first user equipment (400, 610, 700).

4. The method according to claim 3, wherein the method further comprises:
sending, by the first user equipment (400, 610, 700), the behavior recognition model of the target user behavior corresponding to the first user equipment (400, 610, 700) to the behavior recognition server (620), so that the behavior recognition server (620) updates the statistical distribution information of the target parameter according to the behavior recognition model sent by the first user equipment (400, 610, 700).

5. The method according to claim 3 or 4, wherein the target user behavior refers to an activity status of the first user or a respective one of the other users or refers to a scenario that the first user or the respective one of the other users is in, or a combination of the activity status of the first user or the respective one of the other users and the scenario that the first user or the respective one of the other users is in,
wherein the activity status of the first user or the respective one of the other users is walking, running, staying still, climbing stairs, walking down stairs, or sleeping, and the scenario the first user or the respective one of the other users is in is being in an office, in a car, on a train, outdoors, indoors, in a conference, or in a theater.

6. The method according to any one of claims 1 to 5, wherein the target parameter comprises at least one parameter in the behavior recognition model of the target user behavior or a parameter that is related to the at least one parameter.

7. A user behavior recognition method, comprising:
receiving (210), by a behavior recognition server (620), multiple behavior recognition models of a target user behavior that are sent by multiple other user equipments (610) of other users;
determining (220), by the behavior recognition server (620) according to values of a target parameter corresponding to the multiple behavior recognition models of the target user behavior, statistical distribution information of the target parameter, and
sending (230), by the behavior recognition server (620), to a first user equipment (400, 610, 700)of a first user the statistical distribution information of the target parameter, so that the first user equipment (400, 610, 700) obtains a behavior recognition model of the target user behavior corresponding to the first user equipment (400, 610, 700) according to the statistical distribution information of the target parameter,
wherein the first user equipment (400, 610, 700) and the multiple other user equipments (610) are each configured to communicate with one or more core networks by using a radio access network and are each selected from the following group: a mobile phone, a computer with a mobile terminal, a in-vehicle mobile apparatus which exchanges voice and/or data with the radio access network.

8. The method according to claim 7, wherein the target parameter comprises at least one parameter of the behavior recognition model of the target user behavior or a parameter that related to the at least one parameter.

9. The method according to claim 7 or 8, wherein the statistical distribution information of the target parameter which is determined according to the values of the target parameter in the behavior recognition models of the target user behavior that are respectively corresponding to the multiple other user equipments (610) comprises at least one piece of the following information: a probability distribution curve of the target parameter, an expected value of the target parameter, and a value of the target parameter that has a largest occurrence probability.

10. The method according to any one of claims 7 to 9, wherein the target user behavior refers to an activity status of the first user or a respective one of the other users or refers to a scenario that the first user or the respective one of the other users is in, or a combination of the activity status of the first user or the respective one of the other users and the scenario that the first user or the respective one of the other users is in,
wherein the activity status of the first user or the respective one of the other users is walking, running, staying still, climbing stairs, walking down stairs, or sleeping, and the scenario the first user or the respective one of the other users is in is being in an office, in a car, on a train, outdoors, indoors, in a conference, or in a theater.

11. A user behavior recognition method performed in a behavior recognition system that comprises a behavior recognition server (620), a first user equipment (400, 610, 700) of a first user and multiple other user equipments (610) of other users,
wherein the behavior recognition server (620) performs the method steps of the method of any one of claims 7 to 10, the first user equipment (400, 610, 700) performs the method steps of the method of any one of claims 1 to 6, and the multiple other user equipments (610) send to the behavior recognition server (620) the multiple behavior recognition models.

12. A first user equipment (400, 610, 700), comprising a processor for carrying out the method according to any one of claims 1 to 6.

13. A behavior recognition server (620) comprising a processor for carrying out the method according to any one of claims 7 to 10.

14. A behavior recognition system comprising a behavior recognition server (620) according to claim 13, a first user equipment (400, 610, 700) according to claim 12 and multiple other user equipments (610) configured to send to the behavior recognition server (620) the multiple behavior recognition models.

15. A computer-readable storage medium comprising instructions which, when executed by a computer, cause the computer to carry out the method of any one of claims 1 to 6 or of any one of claims 7 to 10.

## Patentansprüche

1. Benutzerverhaltenserkennungsverfahren, das Folgendes umfasst:
Empfangen (230), durch eine erste Benutzereinrichtung (400, 610, 700) eines ersten Benutzers von einem Verhaltenserkennungsserver (620), von statistischen Verteilungsinformationen eines Zielparameters, der durch den Verhaltenserkennungsserver (620) bestimmt wird, wobei die statistischen Verteilungsinformationen des Zielparameters gemäß Werten des Zielparameters bestimmt werden, die mehreren Verhaltenserkennungsmodellen des Zielbenutzerverhaltens entsprechen, die mehreren Verhaltenserkennungsmodelle durch mehrere andere Benutzereinrichtungen (610) anderer Benutzer an den Verhaltenserkennungsserver (620) gesendet werden; und
Erhalten, durch die erste Benutzereinrichtung (400, 610, 700) gemäß den statistischen Verteilungsinformationen des Zielparameters, die von dem Verhaltenserkennungsserver (620) empfangen werden, eines Verhaltenserkennungsmodells des Zielbenutzerverhaltens, das der ersten Benutzereinrichtung (400, 610, 700) entspricht,
wobei die erste Benutzereinrichtung (400, 610, 700) und die mehreren anderen Benutzereinrichtungen (610) jeweils dazu ausgelegt sind, unter Verwendung eines Funkzugangsnetzes mit einem oder mehreren Kernnetzen zu kommunizieren, und jeweils aus der folgenden Gruppe ausgewählt sind: einem Mobiltelefon, einem Computer mit einem mobilen Endgerät, einer fahrzeuginternen Mobileinrichtung, die Sprache und/oder Daten mit dem Funkzugangsnetz austauscht.

2. Verfahren nach Anspruch 1, wobei die statistischen Verteilungsinformationen des Zielparameters, die gemäß den Werten des Zielparameters bestimmt werden, die den mehreren Verhaltenserkennungsmodellen des Zielbenutzerverhaltens entsprechen, die jeweils den mehreren anderen Benutzereinrichtungen (610) entsprechen, mindestens ein Element der folgenden Informationen umfassen: eine Wahrscheinlichkeitsverteilungskurve des Zielparameters, einen erwarteten Wert des Zielparameters und einen Wert des Zielparameters, der eine größte Auftrittswahrscheinlichkeit aufweist.

3. Verfahren nach Anspruch 1 oder 2, wobei das Verfahren ferner Folgendes umfasst:
Erfassen, durch die erste Benutzereinrichtung (400, 610, 700), von Erfassungsdaten;
Bestimmen, durch die erste Benutzereinrichtung (400, 610, 700), eines durch eine Benutzeranweisung angegebenen Zielbenutzerverhaltens, das den Erfassungsdaten entspricht;
Aktualisieren, durch die erste Benutzereinrichtung (400, 610, 700) gemäß den Erfassungsdaten und dem durch die Benutzeranweisung angegebenen Zielbenutzerverhalten, des Verhaltenserkennungsmodells des Zielbenutzerverhaltens, das der ersten Benutzereinrichtung (400, 610, 700) entspricht.

4. Verfahren nach Anspruch 3, wobei das Verfahren ferner Folgendes umfasst:
Senden, durch die erste Benutzereinrichtung (400, 610, 700), des Verhaltenserkennungsmodells des Zielbenutzerverhaltens, das der ersten Benutzereinrichtung (400, 610, 700) entspricht, an den Verhaltenserkennungsserver (620), sodass der Verhaltenserkennungsserver (620) die statistischen Verteilungsinformationen des Zielparameters gemäß dem durch die erste Benutzereinrichtung (400, 610, 700) gesendeten Verhaltenserkennungsmodell aktualisiert.

5. Verfahren nach Anspruch 3 oder 4, wobei sich das Zielbenutzerverhalten auf einen Aktivitätsstatus des ersten Benutzers oder eines jeweiligen der anderen Benutzer bezieht oder sich auf ein Szenario, in dem sich der erste Benutzer oder der jeweilige der anderen Benutzer befindet, oder eine Kombination des Aktivitätsstatus des ersten Benutzers oder des jeweiligen der anderen Benutzer und des Szenarios, in dem sich der erste Benutzer oder der jeweilige der anderen Benutzer befindet, bezieht,
wobei der Aktivitätsstatus des ersten Benutzers oder des jeweiligen der anderen Benutzer gehend, laufend, stillstehend, treppensteigend, Treppen hinuntergehend oder schlafend lautet und das Szenario, in dem sich der erste Benutzer oder der jeweilige der anderen Benutzer befindet, in einem Büro, in einem Auto, in einem Zug, im Freien, in einem Innenbereich, in einer Konferenz oder in einem Theater seiend lautet.

6. Verfahren nach einem der Ansprüche 1 bis 5, wobei der Zielparameter mindestens einen Parameter in dem Verhaltenserkennungsmodell des Zielbenutzerverhaltens oder einen Parameter, der mit dem mindestens einen Parameter im Zusammenhang steht, umfasst.

7. Benutzerverhaltenserkennungsverfahren, das Folgendes umfasst:
Empfangen (210), durch einen Verhaltenserkennungsserver (620), mehrerer Verhaltenserkennungsmodelle eines Zielbenutzerverhaltens, die durch mehrere andere Benutzereinrichtungen (610) anderer Benutzer gesendet werden;
Bestimmen (220), durch den Verhaltenserkennungsserver (620) gemäß Werten eines Zielparameters, der den mehreren Verhaltenserkennungsmodellen des Zielbenutzerverhaltens entspricht, von statistischen Verteilungsinformationen des Zielparameters; und
Senden (230), durch den Verhaltenserkennungsserver (620) an eine erste Benutzereinrichtung (400, 610, 700) eines ersten Benutzers, der statistischen Verteilungsinformationen des Zielparameters, sodass die erste Benutzereinrichtung (400, 610, 700) ein Verhaltenserkennungsmodell des Zielbenutzerverhaltens, das der ersten Benutzereinrichtung (400, 610, 700) entspricht, gemäß den statistischen Verteilungsinformationen des Zielparameters erhält,
wobei die erste Benutzereinrichtung (400, 610, 700) und die mehreren anderen Benutzereinrichtungen (610) jeweils dazu ausgelegt sind, unter Verwendung eines Funkzugangsnetzes mit einem oder mehreren Kernnetzen zu kommunizieren, und jeweils aus der folgenden Gruppe ausgewählt sind: einem Mobiltelefon, einem Computer mit einem mobilen Endgerät, einer fahrzeuginternen Mobileinrichtung, die Sprache und/oder Daten mit dem Funkzugangsnetz austauscht.

8. Verfahren nach Anspruch 7, wobei der Zielparameter mindestens einen Parameter des Verhaltenserkennungsmodells des Zielbenutzerverhaltens oder einen Parameter, der mit dem mindestens einen Parameter im Zusammenhang steht, umfasst.

9. Verfahren nach Anspruch 7 oder 8, wobei die statistischen Verteilungsinformationen des Zielparameters, die gemäß den Werten des Zielparameters bestimmt werden, in den Verhaltenserkennungsmodellen des Zielbenutzerverhaltens, die jeweils den mehreren anderen Benutzereinrichtungen (610) entsprechen, mindestens ein Element der folgenden Informationen umfassen: eine Wahrscheinlichkeitsverteilungskurve des Zielparameters, einen erwarteten Wert des Zielparameters und einen Wert des Zielparameters, der eine größte Auftrittswahrscheinlichkeit aufweist.

10. Verfahren nach einem der Ansprüche 7 bis 9, wobei sich das Zielbenutzerverhalten auf einen Aktivitätsstatus des ersten Benutzers oder eines jeweiligen der anderen Benutzer bezieht oder sich auf ein Szenario, in dem sich der erste Benutzer oder der jeweilige der anderen Benutzer befindet, oder eine Kombination des Aktivitätsstatus des ersten Benutzers oder des jeweiligen der anderen Benutzer und des Szenarios, in dem sich der erste Benutzer oder der jeweilige der anderen Benutzer befindet, bezieht,
wobei der Aktivitätsstatus des ersten Benutzers oder des jeweiligen der anderen Benutzer gehend, laufend, stillstehend, treppensteigend, Treppen hinuntergehend oder schlafend lautet und das Szenario, in dem sich der erste Benutzer oder der jeweilige der anderen Benutzer befindet, in einem Büro, in einem Auto, in einem Zug, im Freien, in einem Innenbereich, in einer Konferenz oder in einem Theater seiend lautet.

11. Benutzerverhaltenserkennungsverfahren, das in einem Verhaltenserkennungssystem durchgeführt wird, das einen Verhaltenserkennungsserver (620), eine erste Benutzereinrichtung (400, 610, 700) eines ersten Benutzers und mehrere andere Benutzereinrichtungen (610) anderer Benutzer umfasst,
wobei der Verhaltenserkennungsserver (620) die Verfahrensschritte des Verfahrens nach einem der Ansprüche 7 bis 10 durchführt, die erste Benutzereinrichtung (400, 610, 700) die Verfahrensschritte des Verfahrens nach einem der Ansprüche 1 bis 6 durchführt und die mehreren anderen Benutzereinrichtungen (610) die mehreren Verhaltenserkennungsmodelle an den Verhaltenserkennungsserver (620) senden.

12. Erste Benutzereinrichtung (400, 610, 700), umfassend einen Prozessor zum Durchführen des Verfahrens nach einem der Ansprüche 1 bis 6.

13. Verhaltenserkennungsserver (620), umfassend einen Prozessor zum Durchführen des Verfahrens nach einem der Ansprüche 7 bis 10.

14. Verhaltenserkennungssystem, das einen Verhaltenserkennungsserver (620) nach Anspruch 13, eine erste Benutzereinrichtung (400, 610, 700) nach Anspruch 12 und mehrere andere Benutzereinrichtungen (610) umfasst, die dazu ausgelegt sind, die mehreren Verhaltenserkennungsmodelle an den Verhaltenserkennungsserver (620) zu senden.

15. Computerlesbares Speichermedium, das Anweisungen umfasst, die bei Ausführung durch einen Computer bewirken, dass der Computer das Verfahren nach einem der Ansprüche 1 bis 6 oder einem der Ansprüche 7 bis 10 durchführt.

## Revendications

1. Procédé de reconnaissance de comportement d'un utilisateur, le procédé comprenant les étapes suivantes :
recevoir (230), par un premier équipement utilisateur (400, 610, 700) d'un premier utilisateur, depuis un serveur de reconnaissance de comportement (620), une information de distribution statistique d'un paramètre cible déterminé par le serveur de reconnaissance de comportement (620), l'information de distribution statistique du paramètre cible étant déterminée en fonction de valeurs du paramètre cible correspondant à plusieurs modèles de reconnaissance du comportement de l'utilisateur cible, les multiples modèles de reconnaissance de comportements étant envoyés par plusieurs autres équipements utilisateurs (610) d'autres utilisateurs au serveur de reconnaissance de comportement (620) ; et
obtenir, par le premier équipement utilisateur (400, 610, 700), en fonction de l'information de distribution statistique du paramètre cible reçue du serveur de reconnaissance de comportement (620), un modèle de reconnaissance du comportement de l'utilisateur cible correspondant au premier équipement utilisateur (400, 610, 700),
où le premier équipement utilisateur (400, 610, 700) et les multiples autres équipements utilisateur (610) sont chacun configurés pour communiquer avec un ou plusieurs réseaux centraux en utilisant un réseau d'accès radio, et sont chacun sélectionnés dans le groupe suivant : un téléphone mobile, un ordinateur muni d'un terminal mobile, un équipement mobile embarqué qui échange de la voix et/ou des données avec le réseau d'accès radio.

2. Procédé selon la revendication 1, dans lequel l'information de distribution statistique du paramètre cible qui est déterminée en fonction des valeurs du paramètre cible correspondant aux multiples modèles de reconnaissance du comportement de l'utilisateur cible qui correspondent respectivement aux multiples autres équipements utilisateur (610) comprend au moins un élément des informations suivantes : une courbe de distribution de probabilité du paramètre cible, la valeur attendue du paramètre cible et la valeur du paramètre cible qui a la probabilité d'occurrence la plus élevée.

3. Procédé selon la revendication 1 ou 2, le procédé comprenant en outre les étapes suivantes :
collecter, par le premier équipement utilisateur (400, 610, 700), des données de détection ;
déterminer, par le premier équipement utilisateur (400, 610, 700), un comportement utilisateur cible correspondant aux données de détection indiquées par une instruction d'utilisateur ;
mettre à jour, par le premier équipement utilisateur (400, 610, 700) en fonction des données de détection et du comportement de l'utilisateur cible indiqué par l'instruction utilisateur, le modèle de reconnaissance du comportement de l'utilisateur cible correspondant au premier équipement utilisateur (400, 610, 700).

4. Procédé selon la revendication 3, dans lequel le procédé comprend en outre l'étape suivante :
envoyer, par le premier équipement utilisateur (400, 610, 700), le modèle de reconnaissance du comportement de l'utilisateur cible correspondant au premier équipement utilisateur (400, 610, 700) au serveur de reconnaissance de comportement (620), de sorte que le serveur de reconnaissance de comportement (620) mette à jour l'information de distribution statistique du paramètre cible en fonction du modèle de reconnaissance de comportement envoyé par le premier équipement utilisateur (400, 610, 700).

5. Procédé selon la revendication 3 ou 4, dans lequel le comportement de l'utilisateur cible se réfère à un statut d'activité du premier utilisateur ou de chaque autre utilisateur, ou se réfère à un scénario dans lequel se trouve le premier utilisateur ou chaque autre utilisateur, ou une combinaison du statut d'activité du premier utilisateur ou de chaque autre utilisateur et du scénario dans lequel se trouve le premier utilisateur ou chaque autre utilisateur,
où le statut d'activité du premier utilisateur ou de chaque autre utilisateur est qu'il marche, qu'il court, qu'il reste immobile, qu'il monte des escaliers, qu'il descend les escaliers ou qu'il dort, et le scénario dans lequel le premier utilisateur ou chaque autre utilisateur est qu'il se trouve dans un bureau, dans une voiture, dans un train, à l'extérieur, à l'intérieur, dans une conférence ou dans un théâtre.

6. Procédé selon l'une quelconque des revendications 1 à 5, dans lequel le paramètre cible comprend au moins un paramètre dans le modèle de reconnaissance du comportement de l'utilisateur cible ou un paramètre qui est lié à l'au moins un paramètre.

7. Procédé de reconnaissance de comportement d'un utilisateur, le procédé comprenant les étapes suivantes :
recevoir (210), par un serveur de reconnaissance de comportement (620), plusieurs modèles de reconnaissance de comportement d'un comportement d'utilisateur cible qui sont envoyés par plusieurs autres équipements utilisateur (610) d'autres utilisateurs ;
déterminer (220), par le serveur de reconnaissance de comportement (620), en fonction des valeurs d'un paramètre cible correspondant aux multiples modèles de reconnaissance du comportement de l'utilisateur cible, une information de distribution statistique du paramètre cible ; et
envoyer (230), par le serveur de reconnaissance de comportement (620), à un premier équipement utilisateur (400, 610, 700) d'un premier utilisateur, l'information de distribution statistique du paramètre cible, de sorte que le premier équipement utilisateur (400, 610, 700) obtienne un modèle de reconnaissance du comportement de l'utilisateur cible correspondant au premier équipement utilisateur (400, 610, 700) en fonction de l'information de distribution statistique du paramètre cible,
où le premier équipement utilisateur (400, 610, 700) et les multiples autres équipements utilisateur (610) sont chacun configurés pour communiquer avec un ou plusieurs réseaux centraux en utilisant un réseau d'accès radio, et sont chacun sélectionnés dans le groupe suivant : un téléphone mobile, un ordinateur muni d'un terminal mobile, un équipement mobile embarqué qui échange de la voix et/ou des données avec le réseau d'accès radio.

8. Procédé selon la revendication 7, dans lequel le paramètre cible comprend au moins un paramètre du modèle de reconnaissance du comportement de l'utilisateur cible ou un paramètre qui est lié à l'au moins un paramètre.

9. Procédé selon la revendication 7 ou 8, dans lequel l'information de distribution statistique du paramètre cible qui est déterminée en fonction des valeurs du paramètre cible dans les modèles de reconnaissance du comportement de l'utilisateur cible qui correspondent respectivement aux multiples autres équipements utilisateur (610) comprend au moins un élément des informations suivantes : une courbe de distribution de probabilité du paramètre cible, la valeur attendue du paramètre cible et la valeur du paramètre cible qui a la probabilité d'occurrence la plus élevée.

10. Procédé selon l'une quelconque des revendications 7 à 9, dans lequel le comportement de l'utilisateur cible se réfère à un statut d'activité du premier utilisateur ou de chaque autre utilisateur, ou se réfère à un scénario dans lequel se trouve le premier utilisateur ou chaque autre utilisateur, ou une combinaison du statut d'activité du premier utilisateur ou de chaque autre utilisateur et du scénario dans lequel se trouve le premier utilisateur ou chaque autre utilisateur,
où le statut d'activité du premier utilisateur ou de chaque autre utilisateur est qu'il marche, qu'il court, qu'il reste immobile, qu'il monte des escaliers, qu'il descend les escaliers ou qu'il dort, et le scénario dans lequel le premier utilisateur ou chaque autre utilisateur est qu'il se trouve dans un bureau, dans une voiture, dans un train, à l'extérieur, à l'intérieur, dans une conférence ou dans un théâtre.

11. Procédé de reconnaissance de comportement d'utilisateur mis en œuvre dans un système de reconnaissance de comportement qui comprend un serveur de reconnaissance de comportement (620), un premier équipement utilisateur (400, 610, 700) d'un premier utilisateur et plusieurs autres équipements utilisateur (610) d'autres utilisateurs,
où le serveur de reconnaissance de comportement (620) exécute les étapes de procédé du procédé selon l'une quelconque des revendications 7 à 10, le premier équipement utilisateur (400, 610, 700) exécute les étapes de procédé du procédé selon l'une quelconque des revendications 1 à 6, et les multiples autres équipements utilisateur (610) envoient au serveur de reconnaissance de comportement (620) les multiples modèles de reconnaissance de comportement.

12. Premier équipement utilisateur (400, 610, 700), comprenant un processeur pour exécuter le procédé selon l'une quelconque des revendications 1 à 6.

13. Serveur de reconnaissance de comportement (620) comprenant un processeur pour exécuter le procédé selon l'une quelconque des revendications 7 à 10.

14. Système de reconnaissance de comportement comprenant un serveur de reconnaissance de comportement (620) selon la revendication 13, un premier équipement utilisateur (400, 610, 700) selon la revendication 12 et plusieurs autres équipements utilisateur (610) configurés pour envoyer au serveur de reconnaissance de comportement (620) les multiples modèles de reconnaissance de comportement.

15. Support de stockage lisible par ordinateur comprenant des instruction qui, lorsqu'elles sont exécutées par un ordinateur, amènent l'ordinateur à exécuter le procédé selon l'une quelconque des revendications 1 à 6 ou l'une quelconque des revendications 7 à 10.
